# EUROPEAN PATENT SPECIFICATION

(11) **EP 0 297 890 B1**
(45) Date of publication and mention of the grant of the patent: **22.10.1997**
(21) Application number: 88305988.3
(22) Date of filing: 30.06.1988
(51) Int. Cl.: G06F 9/38, G06F 11/00

(54) **Apparatus and method for data induced condition signaling**
Gerät und Verfahren zur Signalisierung eines dateninduzierten Zustandes
Dispositif et procédé de signalisation de condition induite par des données

(30) Priority: 01.07.1987 US 69285
(43) Date of publication of application: 04.01.1989
(73) Proprietor: DIGITAL EQUIPMENT CORPORATION, Maynard Massachusetts 01754-1418 (US)
(72) Inventor: Cutler, David N., Bellevue Washington 98004 (US); Orbits, David A., Redmond Washington 98052 (US); Bhandarkar. Dileep, Shrewsbury Massachusetts 01545 (US); Cardoza, Wayne, Merrimack New Hampshire 03054 (US); Witek, Richard T., Littleton Massachusetts 01460 (US)
(74) Representative: Goodman, Christopher

(56) References cited:
- EP-A- 0 130 381
- US-A- 4 334 268
- "MC68020 32-bit microprocessor user's mannual", second editiom, Motoroal Inc., US, (ISBN 0-13-566860-3)
- IEEE MICRO, vol. 7, no. 4, August 1987, pages 28-41, IEEE, New York, US; M. JOHNSON: "System considerations in the design of the AM29000"

## Description

### BACKGROUND OF THE INVENTION

### 1. Field of the Invention

This invention relates generally to data processing systems and, more particularly, to a technique in a data processing system for efficiently invoking a control program based on a predetermined signal in a specified register location.

### 2. Description of the Related Art

As data processing system programs have become larger and more complex, errors in the program have become increasingly hard to identify. The invalid memory reference remains one of the most common programming errors whether reading or writing an invalid address. For example, an array A(i,j) can have the requirement that 0≤i,j≤99. However, an attempt can be made to utilize an index (address) outside of this range. And the invalid address reference most often occurs when the referenced address is part of an array field. Therefore, during program execution, it is important that array addresses be tested to insure that they are within the boundaries of the array. In the past, the program has been provided with extra code to test the array addresses and, when an error is encountered, to call an appropriate responsive subroutine. The additional code for the testing of the array addresses has resulted in programs that are greatly increased in size and which execute at a correspondingly slower rate.

The problem of the testing of array addresses is part of a more general problem of testing a Boolean value and generating an exception when the result is false. Other applications, in addition to the testing of array addresses, include program assertion, testing for procedure success/failure return status and other Boolean tests for which current procedures involve unacceptable program (code) size and/or inefficient program execution.

A need has been felt for a technique that can expedite execution and reduce the program code (size) for programs, such as a program which tests array addresses, that can test Boolean values and generate an exception when the Boolean value is false.

In "MC68020 32-bit microprocessor user's manual", 2nd Edition, Motorola Inc, there is disclosed a "trap on condition code" operation in which a process initiates exception processing when a selected condition is true. If the selected condition is true, a vector number is generated to reference the trap exception vector, and a stacked program counter points to the next instruction. If the selected condition is not true, then no operation is performed and execution continues with the next instruction in sequence. The exception vectors are memory pointers used by the processor to fetch the address of routines which will handle various exceptions, requiring considerable processing overhead.

In EP-0130381 there is disclosed a mechanism for fully executing branch-on-bit instructions within one machine cycle of the host system. The instructions include a field for indicating a register and a bit in said register to be tested, and data to determine the address of the next instruction to be executed if the branch test is successful.

### FEATURES OF THE INVENTION

It is an object of the present invention to provide an improved data processing unit.

It is a feature of the present invention to provide an improved method of efficiently invoking a control program based on a predetermined signal in a specified register location.

It is still another feature of the present invention to provide a Fault on Low Bit instruction, the presence of a signal in the low bit field of a register indicating detection of a false Boolean value.

It is a further feature of the present invention to test a Boolean condition by determining the presence of a particular bit in register location.

### SUMMARY OF THE INVENTION

The aforementioned and other objects are accomplished, according to the present invention, by providing a data processing system with a Fault on Low Bit Clear (FLBC) instruction. Prior to execution of this instruction, a comparison operation is executed to generate a Boolean value. The comparison operation sets or clears the low bit in a specified scalar register, determined by the validity of the comparison operation. In the FLBC instruction, the selected register is tested and if a false Boolean value is found stored therein, the presence of a fault condition is signaled to a fault control program. This instruction eliminates the need for a branch around code sequence that results in a call to an error subroutine specifying the condition resulting in the false Boolean value. In the preferred embodiment, the FLBC instruction is selected so that a field of the instruction can be used to pass information to the fault control program. This instruction results in faster execution time (no branch around subroutine call) and less program code is required to provide the operation. The impact of this single instruction on the program execution time is minimal, permitting for example greater use of the array address checking. Apparatus is provided to supply the data processing issue unit with a copy of the register bit so that the register bit location can be checked without use of an execution unit.

These and other features of the present invention will be understood upon reading of the following description along with the drawings.

### BRIEF DESCRIPTION OF THE DRAWINGS

Figure 1A and Figure 1B are examples of data processing system implementations capable of using the present invention.

Figure 2 is an example of a central processing unit of a data processing unit capable of using the present invention.

Figure 3 is an example of the technique for testing array references according to the prior art.

Figure 4 illustrates the testing of array references according to the present invention.

Figure 5A illustrates the information placed on the data processing system stack in response to an exception condition permitting identification of the exception producing condition.

Figure 5B is an illustrative format for the FLBC instruction.

Figure 6 illustrates the apparatus used to identify the condition signal.

### DESCRIPTION OF THE PREFERRED EMBODIMENT

### 1. Detailed Description of the Figures

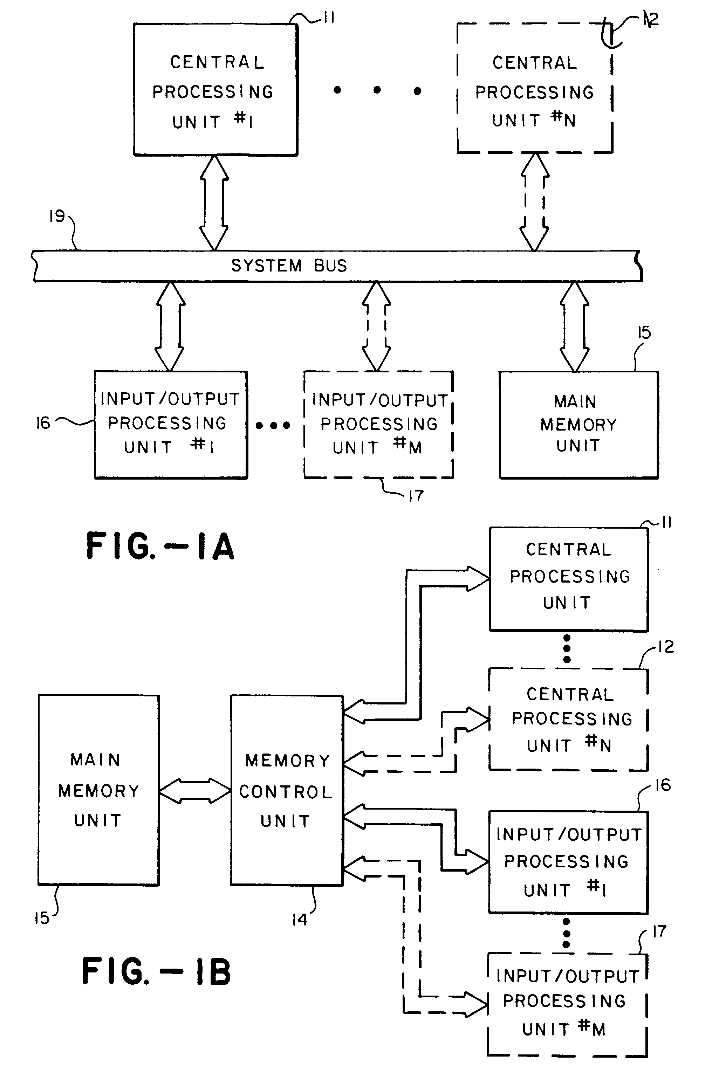

Referring now to Fig. 1A and Fig. 1B, two exemplary data processing system configurations capable of using the present invention are shown. In Fig. 1A, the central processing unit (#1) 11 is coupled to a system bus 19. Other central processing units (e.g., #N) 12 can also be coupled to the system. The central processing unit(s) 11 (through 12) process data according to the structure of the central processing unit(s) in conjunction with central processing unit control programs, the control programs being comprised of instructions resident in the main memory unit 15. The nonresident data and instructions are typically stored in the mass storage unit(s) and are transferred to and from the main memory unit 15 via the system bus 19. Input/output unit(s) {#1} 16 (through {#M} 17) couple devices such as mass memory storage units, user terminal devices and communication devices to the data processing system by means of the system bus 19. The mass storage units store the data and instructions required by the data processing unit(s). Sets of data and/or instructions, typically designated as pages of data and/or instructions, required for the operation of the central processing units 11 through 12, are transferred from the mass storage units, having relatively slow accessibility, to the main memory unit to which access by the central processing unit is relatively fast. The bus oriented system has an advantage in the relative ease to reconfigure the system but has the disadvantage that each system component requires control apparatus to provide an interface with the system bus. Referring next to Fig. 1B, a data processing system is shown in which the central processing unit(s) 11 (through 12) and the input/output unit(s) 16 (through 17) are coupled to the main memory unit 15 through a memory control unit 14, the memory control unit 14 replacing the system bus 19 and the control function performed by individual data processing system components in the bus oriented data processing configuration shown in Fig. 1A. The memory control unit 14 provides a centralized control and monitoring of the transfer of data and instructions that can be more efficient than the bus oriented configuration of Fig. 1, but with the loss of flexibility.

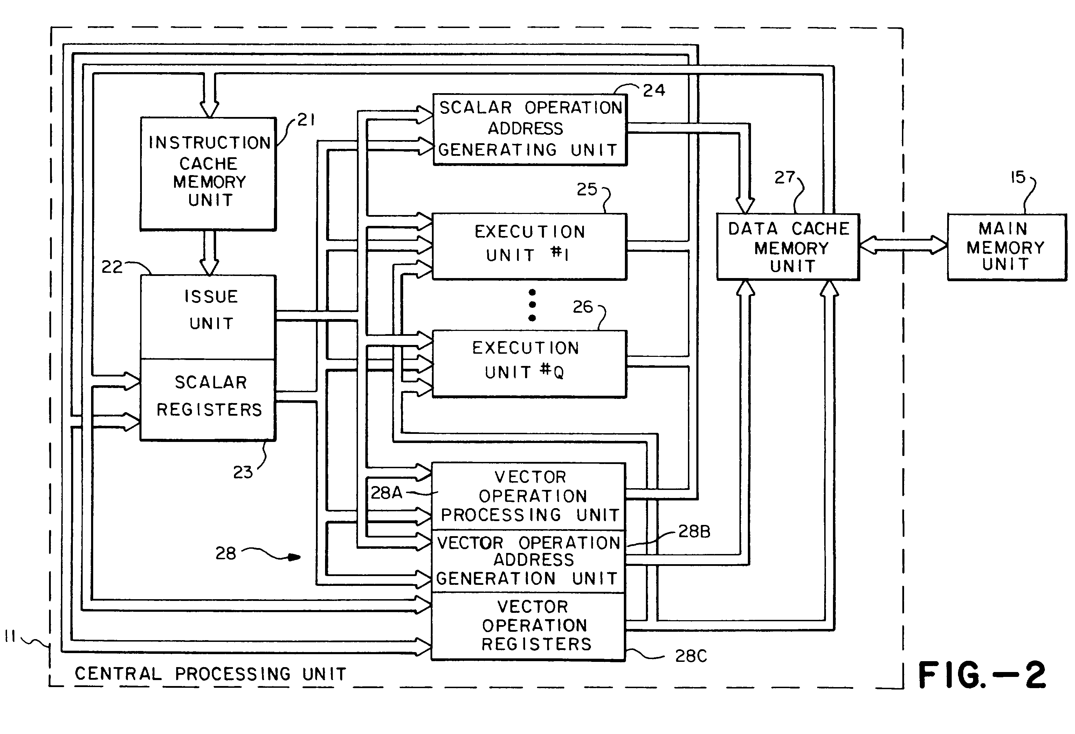

Referring next to Fig. 2, a block diagram of an exemplary central processing unit capable of effective utilization of the present invention is illustrated. The issue unit 22 is responsible for providing (decoded) instructions to the plurality of specialized execution units comprising scalar operation address generation unit 24, at least one execution unit (#1) 25 (through execution unit {#Q} 26) and a vector operation unit 28, the vector operation unit 28 including vector operation processing unit 28A, vector operation address generation unit 28B and vector operation registers 28C. The data processed by the execution units are typically extracted from the scalar registers 23 or the vector registers 28C. The resulting data from the execution units are stored in the scalar registers 23, in the vector registers 28C or in the data cache memory unit 27. The data cache memory unit 27 can be viewed as a cache memory unit providing an interface between the main memory unit 15 and the central processing unit 11. (The data cache memory unit 27 is shown as being coupled directly to the main memory unit in Fig. 2. As illustrated in Fig. 1A and Fig. 1B, the actual coupling can include intervening data processing apparatus.) The issue unit 22 includes apparatus for determining which execution unit will process selected data and for determining when the selected execution unit is available for processing data. This latter feature includes ascertaining that the destination storage location will be available to store the processed data. The instruction cache memory unit 21 stores the instructions that are decoded and forwarded to the appropriate execution unit by the issue unit. The issue unit 22 has the apparatus to attempt to maximize the processing operations of the execution units. Thus, the issue unit 22 includes prefetch apparatus and algorithms to ensure that the appropriate instruction (including any branch instruction) is available to the issue unit 22 as needed. The plurality of execution units are, as indicated by the scalar operation address generation unit 24 and the vector operation unit 28, specialized processing devices for handling certain classes of processing operation. For example, an execution unit can be configured to handle floating point operations, or integer arithmetic operations, etc. The issue unit 22 has associated therewith scalar registers 23 that can store data required for the execution of the program or for providing a record of the data processing operation. For example, one register is the Program Counter register that stores the (virtual) address of the next instruction, in the executing program instruction sequence, to be processed. The scalar operation address generation unit 24 is used to convert virtual addresses to physical locations in the main memory unit 15. The issue unit 22 is also responsible for reordering the data from the execution units in the correct sequence when the execution units process instructions at different rates.

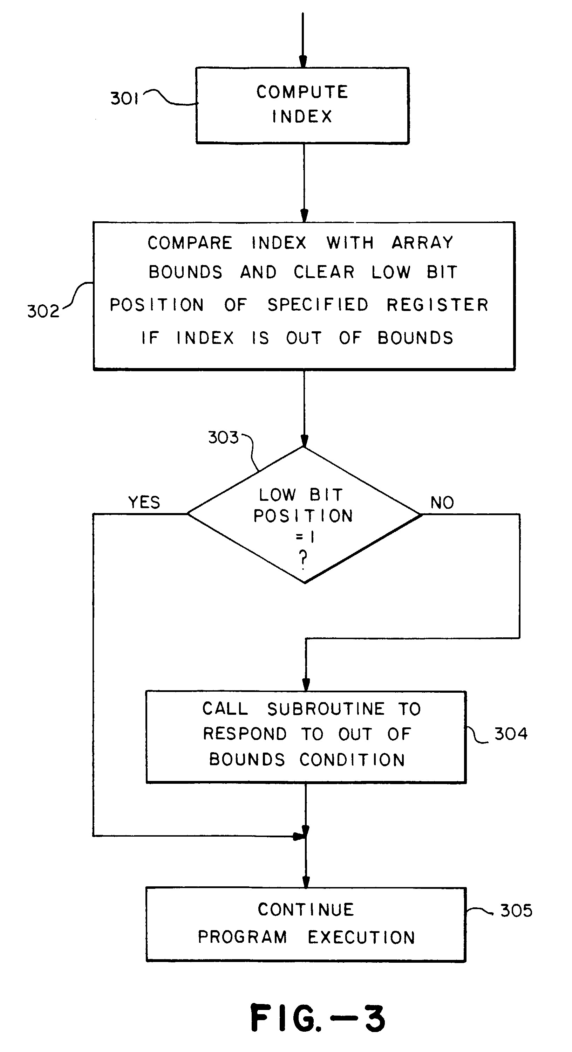

Referring next to Fig. 3, the procedure for testing for and responding to a Boolean condition, according to the prior art, is illustrated in terms of an invalid array index (address). In step 301, an array index is calculated. In step 302, the calculated array index is compared with the bounds for all array indexes, and when the index is not within the permissible bounds, the low bit position of a specified register is cleared (i.e., a logic '0" signal is stored therein). In step 303, the low bit position of the specified register is tested to determine if a logic '1' signal is stored therein. When a logic '1' signal is not stored therein (i.e., the low bit position is clear), a subroutine is called to respond to the condition in step 304. After the fault condition has been responded to, or when the low bit position has a logic '1' signal stored therein, then the program continues execution.

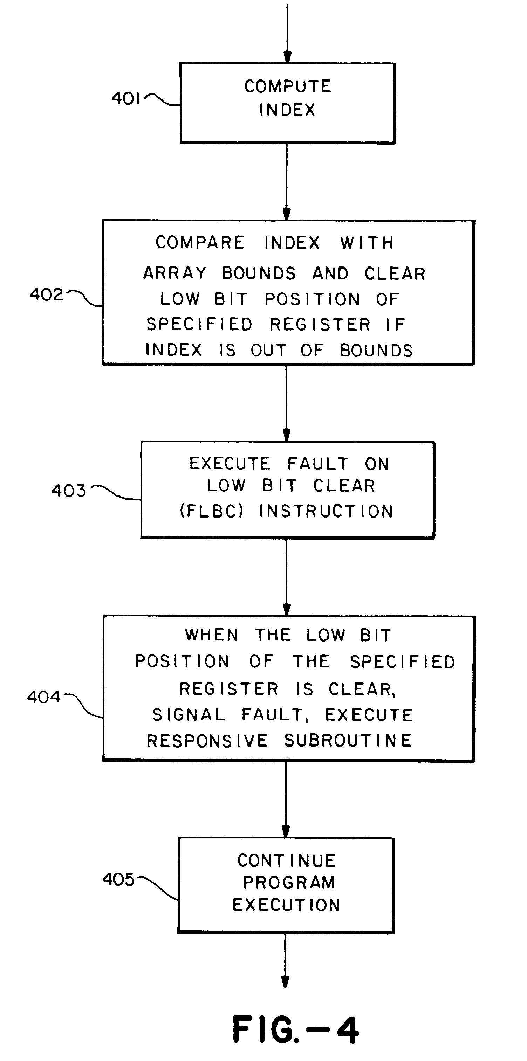

Referring to Fig. 4, the procedure for testing and responding to the Boolean condition, according to the present invention, is illustrated in terms of an array index checking routine (as in Fig. 3). In step 401, the array index is calculated. In step 402, a comparison is made to determine if the index is within the boundaries for array indexes and when the index is not within the permissible bounds, a logic '0' is stored in the low bit position of a specified register. In step 403, the Fault on Low Bit Clear (FLBC) instruction is executed. When the low bit position of the specified register is clear (i.e., has a logic '0' signal stored therein), then a fault is signaled and a responsive subroutine is executed in step 404. When the low bit position of the specified register has logic '1' stored therein in step 403 or at the conclusion of responsive subroutine in step 404, the execution of the program continues in step 405.

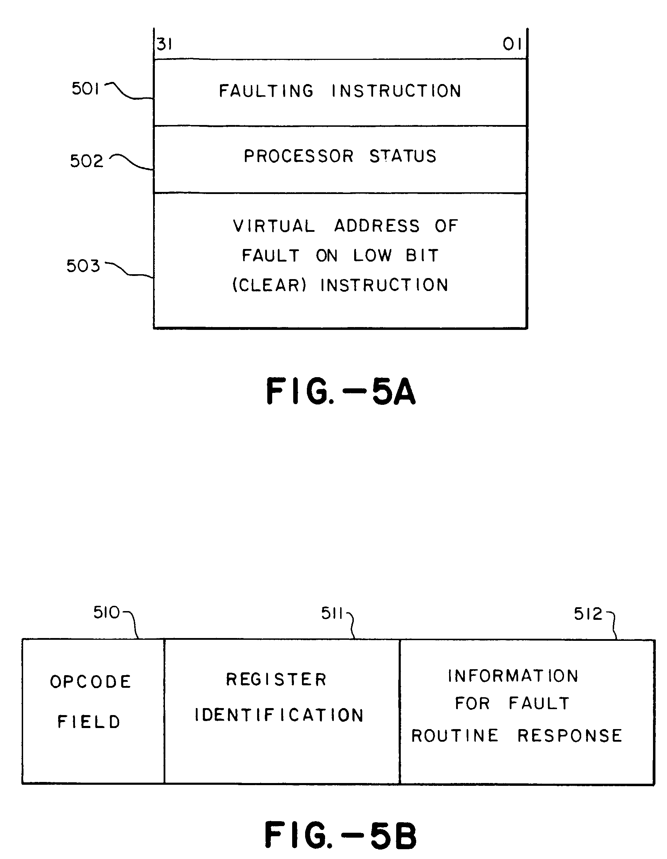

Referring next to Fig. 5A, when the fault condition is signaled, the data processing system mechanism (e.g., implemented in apparatus or in a special operating mode in the preferred embodiment) responsive to the fault condition stores information in the data processing unit stack that permits a control program routine to localize the source of the array reference error. In the preferred embodiment, the faulting instruction 501 is stored in one field (to preserve encoded information concerning the fault that is included in the instruction itself in the preferred embodiment), the processor status is stored in field 502 and the virtual address of the fault on low bit (clear) instruction is stored in field 503. The processor status field includes status information such as interrupt level, vector instruction enable signal, the vector restart frame, the currently executing mode of operation signal and a virtual machine monitor field.

Referring to Fig. 5B, an exemplary format for the Fault on Low Bit Clear instruction is shown. In field 510, the opcode field identifies (to the issue unit 22) the instruction (for example, Fault on Low Bit Clear) to be executed. In response, the issue unit 22 activates the apparatus to execute the instruction. Field 511 specifies to the issue unit 22 the register for which the Boolean condition (for example, low bit clear) is to be examined. Field 512 provides information that permits the data processing system to respond to the specific fault condition signaled by the instruction, such as an address.

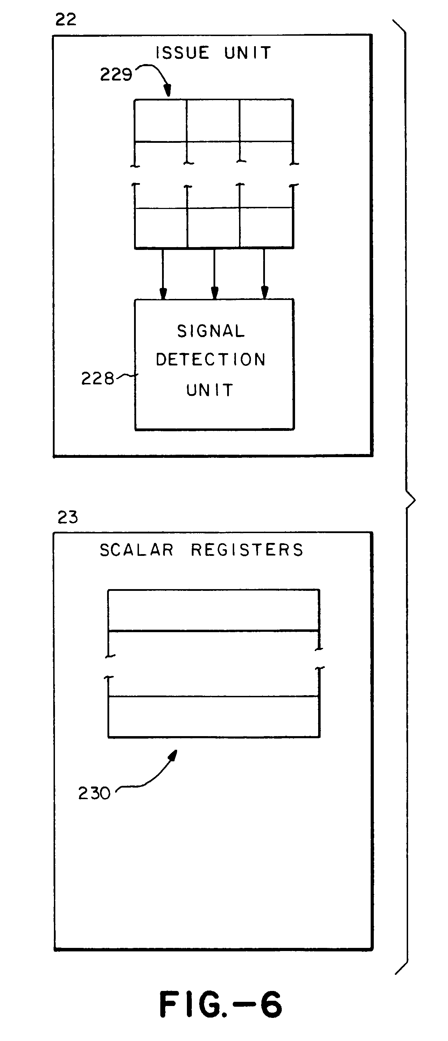

Referring to Fig. 6, the preferred embodiment for an apparatus for detecting the condition signal is illustrated. Associated with each scalar register in the scalar register bank 230 of scalar register unit 23 is a three bit summary register in register bank 229 in issue unit 22. The three bits include a bit position indicating that the associated register in register bank 230 has all zeros stored therein. The second bit position indicates the sign of the data in the associated register. And the third bit position is the same bit value stored in the least significant register position in the associated register in register bank 230. A signal detection unit 228 is provided so that any of the bit positions of the associated summary register can be interrogated. Thus, in response to an instruction, such as Fault on Low Bit Clear, the signal in the identified register can be identified and the fault condition signaled when appropriate.

### 2. Operation of the Preferred Embodiment

The central processing unit having pipelined execution units of Fig. 2 was implemented in the preferred embodiment subject to several constraints, however, other design implementations can utilize the present invention. The central processing unit includes a plurality of execution units, each execution unit adapted to execute a class of instructions. By way of example, one execution unit, the scalar address generating unit 24, controls the transfer of the logic signal groups between the central processing unit and the main memory unit, i.e., executes the scalar load/store instructions. One execution unit is adapted to execute data shifting operations, one execution unit for floating point add/subtract operations, one execution unit is adapted for integer and floating point multiply operations and one execution unit is adapted for integer and floating point divide operations. The specialized execution units can be, but are not necessarily implemented in a pipelined configuration. The other features of the central processing unit are the following. The instruction in the currently executing sequence of instructions is transferred to the issue unit 22 from the instruction cache memory unit 21. In the issue unit, the instruction is broken down into its constituent parts and data-dependent control signals and address signals are generated therefrom. However, before an instruction can begin execution (i.e., be issued), several constraints must be satisfied. All source and destination registers for the instruction must be available, i.e., no write operations to a needed register can be outstanding. The register write path must be available at the future cycle in which this instruction will store the processed quantity. The execution unit to be required for processing the instruction during the execution must be available to perform the operation. With respect to the vector operation unit, a vector operation reserves an execution unit for the duration of the vector operation. When a memory load/store instruction experiences a cache memory unit miss, the load/store unit busy flag will cause the subsequent load/store instructions to be delayed until the cache memory miss response is complete. When an instruction does issue, the destination register and the write path cycle for the result are reserved. During operand set-up, all instruction-independent register addresses are generated, operands are read and stored, and data-dependent control signals are generated. The instruction operands and control signals are passed to the associated execution unit for execution. The result generated by the execution unit is stored in the register files or in the data cache memory unit 27 as appropriate. Once an instruction issues, the result of the processing may not be available for several machine cycles. Meanwhile, in the next machine cycle, the next instruction can be decoded and can be issued when the requisite issue conditions are satisfied. Thus, the instructions are decoded and issued in the normal instruction sequence, but the results can be stored in a different order because of the varying instruction execution times of the execution units. This out of order storing complicates the exception handling and the retry of failing instructions. However, these events are relatively rare and the out of order storing provides execution and hardware advantages.

In comparing Fig. 3 and Fig. 4, the first two steps 301 and 302 of Fig. 3 are the same as the first two steps 401 and 402 of Fig. 4. In the prior art, step 303 required that a logical comparison be made of the low bit position of the specified register and a reference value. Such activity typically involves a conditional branch around a subroutine call, thereby disrupting the efficient sequential flow of instruction execution. Conditional branch procedures impose a large performance penalty on high performance data processing systems. By comparison, the FLBC instruction checks for the presence of a fault condition, and the next sequential instruction can be executed without delay when a fault condition is not present. The presence of a fault condition identified by this instruction causes the control program to store information on the stack that will permit the exception handling program to identify the origin of a fault condition.

This type of instruction, i.e., the Fault on Low Bit Clear instruction, can also be used to check the program execution status, when used in conjunction with programming conventions. When a program executes correctly, a Boolean value of true (i.e., '1') is returned, and a Boolean value of false (i.e., '0') when an error is discovered. The error status can be checked by a Fault on Low Bit Clear instruction.

In the preferred embodiment, the execution units separately provide the status signals (from step 403) to associated status or summary registers 229 at the same time that the full quantities are being returned to the scalar registers 23. The summary registers permit more expeditious determination of the signal stored in the specified position of the specified register.

It will be clear to those skilled in the art that, although the low bit position of the specified register is used in the FLBC instruction, any specified register position can be used to communicate the condition information and can signal a fault condition. It will also be clear that this basic mechanism can be used to implement similar functions, such as a Fault on Register Equal to Zero condition or a Fault on Register Negative condition.

The foregoing description is included to illustrate the operation of the preferred embodiment and is not meant to limit the scope of the invention. The scope of the invention is to be limited only by the following claims. From the foregoing description, many variations will be apparent to those skilled in the art that would yet be encompassed by the scope of the invention as defined in the appended claims.

## Claims

1. A method of controlling a processor in a digital data processing system as it is processing instructions in an instruction stream, comprising the steps of:
generating, during processing of a particular instruction in said instruction stream, a condition flag having one of a plurality of possible states indicating whether a fault condition exists in connection with said processing of said particular instruction based on predetermined rules for identifying a fault condition and storing said condition flag in a predetermined location in data storage internal to said processor not altered by processing of instructions in said instruction stream subsequent to said particular instruction; and
executing, at any time following generation of said condition flag, a fault detection instruction which tests the state of said stored condition flag and either:
(a) initiates execution of a fault handling instruction sequence in response to a first state of said condition flag indicating that a fault condition exists, and after completing execution of said fault handling sequence initiates execution of the next sequential instruction following said executed fault detection instruction; and
(b) otherwise initiates execution of the next sequential instruction following said executed fault detection instruction in said -instruction stream in response to a second state of said condition flag indicating that no fault condition exists, so that when no fault condition is detected said instruction stream is processed in sequential order.

2. A method as defined in claim 1 wherein said instruction in said instruction stream references an address; and wherein said condition flag indicating whether a fault condition exists is a condition flag indicating whether the referenced address is outside a predetermined range and that therefore a fault condition exists.

3. The method as defined in claim 1 or 2 in which the executing step includes the step, following testing of the state of the stored condition flag and prior to execution of a fault handling instruction sequence, of storing a fault frame on a stack for use in identifying the fault condition.

4. The method as defined in claim 3 in which said fault frame storing step includes the steps of storing an address pointing to said particular instruction, storing a processor status identification, and storing an address of the fault detection instruction which conditioned the condition flag.

5. A digital data processor for processing instructions in an instruction stream, instructions comprising said instruction stream, said processor including:
A. condition instruction execution means for generating, during processing of a particular instruction in said instruction stream, a condition flag having one of a plurality of possible states indicating whether a fault condition exists in connection with said processing of said particular instruction based on predetermined rules for identifying a fault condition and storing said condition flag in a predetermined location in data storage internal to said processor not altered by processing of instructions in said instruction stream subsequent to said particular instruction; and
B. fault detection instruction execution means responsive to a fault detection instruction occurring in said instruction stream subsequent to said particular instruction at any time following generation of said condition flag, for testing the condition of said stored condition flag and initiating executing a fault handling instruction sequence in response to said condition flag indicating a fault condition exits, and for initiating execution of the next sequential instruction following said executed fault detection instruction after completing execution of said fault handling instruction sequence, and for otherwise enabling said processor to execute the next sequential instruction following said executed fault detection instruction in said instruction stream in response to another condition of said condition flag indicating that no fault condition exists, so that when no fault condition is detected said instruction stream is processed in sequential order.

6. A processor as defined in Claim 5 wherein said instructions comprising said instruction stream including a condition instruction type and a fault instruction, and wherein said condition flag indicating whether a fault condition exists is generated by said execution means for generating during processing of an instruction in said instruction stream of said condition instruction type.

7. A processor as defined in Claim 5 wherein said instruction processed in said instruction stream references an address, and wherein said condition flag is a condition flag indicating whether the referenced address is outside a predetermined range and that therefore a fault condition exists.

8. The processor as defined in claim 6 or 7 in which the fault detection instruction execution means stores a fault frame on a stack for use in identifying the condition following testing of the condition of the condition flag and prior to execution of a fault instruction sequence.

9. The processor as defined in claim 8 in which said fault frame includes an address pointing to said instruction, a processor status identification, and an address of an instruction which conditioned the condition flag.

10. The processor as defined in claim 6 or 7 further including a plurality of registers, a predetermined one of said registers including said condition flag, said condition instruction execution means conditioning a predetermined bit in said predetermined register, and said fault instruction execution means testing said predetermined bit in said predetermined register to determine whether a fault condition exists.

11. The processor as defined in claims 5 or 6 or 7 further including: (i) a plurality of registers, a predetermined one of said registers including said condition flag, said condition instruction execution means conditioning a predetermined bit in said predetermined register, and (ii) a summary register for at least said predetermined register including a selected bit identifying the condition of said predetermined bit, and said fault instruction execution means testing said selected bit in said summary register to determine whether a fault condition exists.

12. The processor as defined in claims 5 or 8 wherein said predetermined location in data storage of said processor comprises a scalar storage register associated with an instruction issue unit of said processor separate from a processor main memory or main memory cache.

13. The method as defined in claims 1 or 4 wherein said step of generating and storing includes the step of storing said condition flag in data storage of said processor within a scalar storage register associated with an instruction issue unit of said processor separate from a processor main memory or main memory cache.

14. The method as defined in claim 13 wherein said step of executing said fault detection instruction which tests the state of said stored condition flag is executed within said instruction issue unit of said processor; and wherein said method further comprises the step of specifying a particular scalar register storing said condition flag to be examined for a fault condition by said fault detection instruction.

15. The method as defined in claim 1 wherein said step of initiating execution of a fault handling instruction sequence comprises, before executing said fault handling instruction sequence,
storing a fault frame on a stack for use in identifying the condition including the steps of: (i) storing an address pointing to said instruction on said stack; (ii) storing a processor status identification on said stack; and (iii) storing an address of an instruction which conditioned the condition flag on said stack.

16. A digital data processor as defined in claim 5 wherein said particular instruction is a condition instruction type instruction which conditions a predetermined bit in a predetermined one of a plurality of registers of said processor and wherein said fault detection instruction execution means includes:
fault condition means for testing said predetermined bit in said predetermined register to determine whether a fault condition exists, said fault condition means being responsive to said condition flag indicating a fault condition including:
stack store means for storing a fault frame on a stack for use in identifying the condition including: (i) means for storing an address pointing to said instruction on said stack; (ii) means for storing a processor status identification on said stack; and (iii) means for storing an address of an instruction which conditioned the condition flag on said stack.

## Patentansprüche

1. Verfahren zum Steuern eines Prozessors in einem digitalen Datenverarbeitungssystem, wenn er Befehle in einem Befehlsstrom verarbeitet, mit den folgenden Schritten:
während des Verarbeitens eines besonderen Befehls in dem Befehlsstrom Erzeugen eines Zustandsmerkers mit einem von mehreren möglichen Zuständen, der auf der Grundlage vorgegebener Regeln zum Identifizieren eines Fehlerzustands angibt, ob im Zusammenhang mit der Verarbeitung des besonderen Befehls ein Fehlerzustand vorliegt, und Speichern des Zustandsmerkers an einer vorgegebenen Stelle im internen Datenspeicher des Prozessors, die durch die Verarbeitung von Befehlen, die in dem Befehlsstrom dem besonderen Befehl nachfolgen, nicht verändert wird; und
zu einem beliebigen Zeitpunkt nach der Erzeugung des Zustandsmerkers Ausführen eines Fehlererfassungsbefehls, der den Zustand des gespeicherten Zustandsmerkers prüft und entweder:
(a) als Antwort auf einen das Vorliegen eines Fehlerzustands angebenden ersten Zustand des Zustandsmerkers die Ausführung einer Fehlerverarbeitungsbefehlssequenz einleitet und nach Abschluß der Ausführung der Fehlerverarbeitungssequenz die Ausführung des nächsten sequentiellen Befehls, der dem ausgeführten Fehlererfassungsbefehl folgt, einleitet; oder
(b) als Antwort auf einen keinen Fehlerzustand angebenden zweiten Zustand des Zustandsmerkers die Ausführung des nächsten sequentiellen Befehls, der dem ausgeführten Fehlererfassungsbefehl im Befehlsstrom folgt, einleitet, so daß der Befehlsstrom in sequentieller Reihenfolge verarbeitet wird, wenn kein Fehlerzustand erfaßt wird.

2. Verfahren nach Anspruch 1, bei dem der Befehl im Befehlsstrom auf eine Adresse Bezug nimmt; und bei dem der Zustandsmerker, der angibt, ob ein Fehlerzustand vorliegt, ein Zustandsmerker ist, der angibt, ob die Adresse, auf die Bezug genommen wird, außerhalb eines vorgegebenen Bereichs liegt und deshalb ein Fehlerzustand vorliegt.

3. Verfahren nach Anspruch 1 oder 2, bei dem der Ausführungsschritt nach dem Prüfen des Zustands des gespeicherten Zustandsmerkers und vor der Ausführung einer Fehlerverarbeitungsbefehlssequenz den Schritt des Speicherns eines Fehlerrahmens in einem Stapel zur Verwendung für die Identifizierung des Fehlerzustands umfaßt.

4. Verfahren nach Anspruch 3, bei dem der Fehlerrahmen-Speicherschritt die Schritte des Speicherns einer auf den besonderen Befehl zeigenden Adresse, des Speicherns einer Prozessorstatusidentifizierung und des Speicherns einer Adresse des Fehlererfassungsbefehls, der den Zustandsmerker konditioniert hat, umfaßt.

5. Digitaler Datenprozessor zum Verarbeiten von Befehlen in einem Befehlsstrom, wobei die Befehle den Befehlsstrom bilden, wobei der Prozessor enthält;
A. eine Zustandsbefehl-Ausführungseinrichtung, die während der Verarbeitung eines besonderen Befehls im Befehlsstrom einen Zustandsmerker mit einem von mehreren möglichen Zuständen erzeugt, der auf der Grundlage vorgegebener Regeln zum Identifizieren eines Fehlerzustands angibt, ob im Zusammenhang mit der Verarbeitung des besonderen Befehls ein Fehlerzustand vorliegt, und den Zustandsmerker an einer besonderen Stelle im internen Datenspeicher des Prozessors speichert, die durch die Verarbeitung von Befehlen, die im Befehlsstrom dem besonderen Befehl nachfolgen, nicht verändert wird; und
B. eine Fehlererfassungsbefehl-Ausführungseinrichtung, die zu jedem beliebigen Zeitpunkt nach der Erzeugung des Zustandsmerkers auf den Fehlererfassungsbefehl anspricht, der im Befehlsstrom nach dem besonderen Befehl auftritt, um den Zustand des gespeicherten Zustandsmerkers zu prüfen und um als Antwort auf den das Vorliegen eines Fehlerzustands angebenden Zustandsmerker die Ausführung einer Fehlerverarbeitungsbefehlssequenz einzuleiten und dann, wenn die Ausführung der Fehlerverarbeitungsbefehlssequenz abgeschlossen ist, die Ausführung des nächsten sequentiellen Befehls, der dem ausgeführten Fehlererfassungsbefehl folgt, einzuleiten, oder um andernfalls den Prozessor freizugeben, damit er als Antwort auf einen weiteren Zustand des Zustandsmerkers, der kein Vorliegen eines Fehlers angibt, den nächsten sequentiellen Befehl ausführt, der im Befehlsstrom dem ausgeführten Fehlererfassungsbefehl folgt, so daß der Befehlsstrom in sequentieller Reihenfolge verarbeitet wird, wenn kein Fehlerzustand erfaßt wird.

6. Prozessor nach Anspruch 5, in dem die den Befehlsstrom umfassenden Befehle einen Zustandsbefehlstyp und einen Fehlerbefehl enthalten und in dem der Zustandsmerker, der das Vorliegen eines Fehlerzustands angibt, durch die Erzeugungsausführungseinrichtung während der Verarbeitung eines Befehls des Zustandsbefehlstyps im Befehlsstrom erzeugt wird.

7. Prozessor nach Anspruch 5, in dem der im Befehlsstrom verarbeitete Befehl auf eine Adresse Bezug nimmt und in dem der Zustandsmerker ein Zustandsmerker ist, der angibt, ob die Adresse, auf die Bezug genommen wird, außerhalb eines vorgegebenen Bereichs liegt und somit ein Fehlerzustand vorliegt.

8. Prozessor nach Anspruch 6 oder 7, in dem die Fehlererfassungsbefehl-Ausführungseinrichtung einen Fehlerrahmen in einem Stapel speichert, um ihn nach dem Prüfen des Zustands des Zustandsmerkers und vor der Ausführung einer Fehlerbefehlssequenz zum Identifizieren des Zustands zu verwenden.

9. Prozessor nach Anspruch 8, in dem der Fehlerrahmen eine auf den Befehl zeigende Adresse, eine Prozessorstatusidentifizierung und eine Adresse eines Befehls, der den Zustandsmerker konditionierte, enthält.

10. Prozessor nach Anspruch 6 oder 7, ferner mit mehreren Registern, wovon ein vorgegebenes den Zustandsmerker enthält, wobei die Zustandsbefehlsausführungseinrichtung ein vorgegebenes Bit im vorgegebenen Register konditioniert und die Fehlerbefehlsausführungseinrichtung das vorgegebene Bit in dem vorgegebenen Register prüft, um festzustellen, ob ein Fehlerzustand vorliegt.

11. Prozessor nach Anspruch 5 oder 6 oder 7, ferner mit: (i) mehreren Registern, wovon eines den Zustandsmerker enthält, wobei die Zustandsbefehlsausführungseinrichtung ein vorgegebenes Bit in dem vorgegebenen Register konditioniert und (ii) einem Protokollregister wenigstens für das ein ausgewähltes Bit enthaltende vorgegebene Register, das den Zustand des vorgegebenen Bits identifiziert, wobei die Fehlerbefehlsausführungseinrichtung das ausgewählte Bit im Protokollregister prüft, um festzustellen, ob ein Fehlerzustand vorliegt.

12. Prozessor nach Anspruch 5 oder 8, in dem die vorgegebene Stelle im Datenspeicher des Prozessors ein skalares Speicherregister bildet, das einer von einem Prozessor-Arbeitsspeicher oder von einem Arbeitsspeicher-Cache getrennten Befehlsausgabeeinheit des Prozessors zugeordnet ist.

13. Verfahren nach Anspruch 1 oder 4, bei dem der Schritt des Erzeugens und Speicherns den Schritt des Speicherns des im Datenspeicher des Prozessors befindlichen Zustandsmerkers in einem skalaren Speicherregister enthält, das einer von einem Prozessor-Arbeitsspeicher oder von einem Arbeitsspeicher-Cache getrennten Befehlsausgabeeinheit des Prozessors zugeordnet ist.

14. Verfahren nach Anspruch 13, bei dem der Schritt des Ausführens des Fehlererfassungsbefehls, der den Zustand des gespeicherten Zustandsmerkers prüft, in der Befehlsausgabeeinheit des Prozessors ausgeführt wird; und wobei das Verfahren ferner den Schritt des Spezifizierens eines besonderen Skalarregisters enthält, das den Zustandsmerker speichert, der vom Fehlererfassungsbefehl auf einen Fehlerzustand untersucht werden soll.

15. Verfahren nach Anspruch 1, bei dem der Schritt des Einleitens der Ausführung einer Fehlerverarbeitungsbefehlssequenz vor der Ausführung der Fehlerverarbeitungsbefehlssequenz das Speichern eines Fehlerrahmens in einem Stapel zur Verwendung bei der Identifizierung umfaßt, mit den Schritten: (i) Speichern einer Adresse, die auf den Befehl im Stapel zeigt; (ii) Speichern einer Prozessorstatusidentifizierung im Stapel; und (iii) Speichern einer Adresse eines Befehls, der den Zustandsmerker im Stapel konditionierte.

16. Digitaler Datenprozessor nach Anspruch 5, in dem der besondere Befehl ein Befehl des Zustandsbefehlstyps ist, der ein vorgegebenes Bit in einem vorgegebenen von mehreren Registern des Prozessors konditioniert, und in dem die Fehlererfassungsbefehls-Ausführungseinrichtung enthält:
eine Fehlerzustandseinrichtung zum Prüfen des vorgegebenen Bits im vorgegebenen Register, um festzustellen, ob ein Fehlerzustand vorliegt, wobei die Fehlerzustandseinrichtung auf den einen Fehlerzustand angebenden Zustandsmerker anspricht, mit:
einer Stapelspeichereinrichtung zum Speichern eines Fehlerrahmens im Stapel zur Verwendung bei der Identifizierung des Zustands, mit: (i) einer Einrichtung zum Speichern einer Adresse, die auf den Befehl im Stapel zeigt; (ii) einer Einrichtung zum Speichern einer Prozessorstatusidentifizierung im Stapel; und (iii) einer Einrichtung zum Speichern einer Adresse eines Befehls, der den Zustandsmerker im Stapel konditionierte.

## Revendications

1. Méthode de commande d'un processeur dans un système de traitement de données numériques, pendant qu'il traite des instructions d'une suite d'instructions, comprenant les étapes qui consistent à :
créer, au cours du traitement d'une instruction particulière de ladite suite d'instructions, un drapeau de condition ayant l'un de plusieurs états possibles indiquant s'il existe une condition de défaut en relation avec ledit traitement de ladite instruction particulière en fonction de règles prédéterminées pour identifier une condition de défaut, et stocker ledit drapeau de condition dans un emplacement prédéterminé d'un dispositif de stockage de données interne audit processeur, non modifié par le traitement d'instructions de ladite suite d'instructions postérieurement à ladite instruction particulière; et
exécuter, à n'importe quel moment après la création dudit drapeau de condition, une instruction de détection de défaut qui contrôle l'état dudit drapeau de condition stocké et qui :
(a) déclenche l'exécution d'une séquence d'instructions de prise en charge de défaut en réponse à un premier état dudit drapeau de condition, indiquant qu'il existe une condition de défaut et, une fois terminée l'exécution de ladite séquence de prise en charge de défaut, déclenche l'exécution de l'instruction séquentielle suivante après l'exécution de ladite instruction de détection de défaut; et,
(b) sinon, déclenche l'exécution de l'instruction séquentielle suivante après l'exécution de ladite instruction de détection de défaut au cours de ladite suite d'instructions en réponse à un second état dudit drapeau de condition indiquant qu'il n'existe aucune condition de défaut, afin que lorsqu'aucune condition de défaut n'est détectée, ladite suite d'instructions soit traitée dans un ordre séquentiel.

2. Méthode telle que définie dans la revendication 1, selon laquelle ladite instruction de ladite suite d'instructions fait référence à une adresse; et selon laquelle ledit drapeau de condition indiquant s'il existe une condition de défaut est un drapeau de condition qui indique si l'adresse de référence se situe en dehors d'une plage prédéterminée et qu'il existe par conséquent une condition de défaut.

3. Méthode telle que définie dans la revendication 1 ou 2, selon laquelle l'étape d'exécution comprend l'étape qui consiste, après le contrôle de l'état du drapeau de condition stocké et avant l'exécution d'une séquence d'instructions de prise en charge de défaut, à stocker un bloc de défaut sur une pile servant à identifier la condition de défaut.

4. Méthode telle que définie dans la revendication 3, selon laquelle ladite étape de stockage de bloc de défaut comprend les étapes de stockage d'une adresse indiquant ladite instruction particulière, de stockage d'une identification d'état du processeur, et de stockage d'une adresse de l'instruction de détection de défaut qui a déterminé l'état du drapeau de condition.

5. Processeur de données numériques destiné à traiter des instructions d'une suite d'instructions, les instructions formant ladite suite d'instructions, ledit processeur comprenant :
A. des moyens d'exécution d'instruction de condition destinés à créer, au cours du traitement d'une instruction particulière de ladite suite d'instructions, un drapeau de condition ayant l'un de plusieurs états possibles indiquant s'il existe une condition de défaut en relation avec ledit traitement de ladite instruction particulière en fonction de règles prédéterminées pour identifier une condition de défaut, et à stocker ledit drapeau de condition dans un emplacement prédéterminé d'un dispositif de stockage de données interne audit processeur, non modifié par le traitement d'instructions de ladite suite d'instructions postérieurement à ladite instruction particulière; et
B. des moyens d'exécution d'instruction de détection de défaut sensibles à l'apparition d'une instruction de détection de défaut dans ladite suite d'instructions postérieurement à ladite instruction particulière, à n'importe quel moment après la création dudit drapeau de condition, pour contrôler l'état dudit drapeau de condition stocké et déclencher l'exécution d'une séquence d'instructions de prise en charge de défaut en réponse au fait que ledit drapeau de condition indique l'existence d'une condition de défaut, et pour déclencher l'exécution de l'instruction séquentielle suivante après l'exécution de ladite instruction de détection de défaut, une fois terminée l'exécution de ladite séquence d'instructions de prise en charge de défaut, et pour, sinon, activer ledit processeur pour qu'il exécute l'instruction séquentielle suivante après l'exécution de ladite instruction de détection de défaut au cours de ladite suite d'instructions en réponse à un autre état dudit drapeau de condition indiquant qu'il n'existe aucune condition de défaut, afin que lorsqu'aucune condition de défaut n'est détectée, ladite suite d'instructions soit traitée dans un ordre séquentiel.

6. Processeur tel que défini dans la revendication 5, dans lequel lesdites instructions formant ladite suite d'instructions comprennent un type d'instruction de condition et une instruction de défaut, et dans lequel ledit drapeau de condition indiquant s'il existe une condition de défaut est créé par lesdits moyens d'exécution destinés à créer ledit type d'instruction de condition au cours du traitement d'une instruction de ladite suite d'instructions.

7. Processeur tel que défini dans la revendication 5, dans lequel ladite instruction traitée au cours de ladite suite d'instructions fait référence à une adresse, et dans lequel ledit drapeau de condition est un drapeau de condition indiquant si l'adresse de référence se situe en dehors d'une plage prédéterminée et qu'il existe par conséquent une condition de défaut.

8. Processeur tel que défini dans la revendication 6 ou 7, dans lequel les moyens d'exécution d'instruction de détection de défaut stockent un bloc de défaut sur une pile servant à identifier la condition après le contrôle de l'état du drapeau de condition et avant l'exécution d'une séquence d'instructions de défaut.

9. Processeur tel que défini dans la revendication 8, dans lequel ledit bloc de défaut contient une adresse indiquant ladite instruction, une identification d'état du processeur, et une adresse d'une instruction qui a déterminé l'état du drapeau de condition.

10. Processeur tel que défini dans la revendication 6 ou 7, comprenant en outre plusieurs registres, un registre prédéterminé parmi lesdits registres contenant ledit drapeau de condition, lesdits moyens d'exécution d'instruction de condition déterminant l'état d'un bit prédéterminé dans ledit registre prédéterminé, et lesdits moyens d'exécution d'instruction de défaut contrôlant ledit bit prédéterminé dudit registre prédéterminé pour déterminer s'il existe une condition de défaut.

11. Processeur tel que défini dans la revendication 5, 6 ou 7, comprenant en outre : (i) plusieurs registres, un registre prédéterminé parmi lesdits registres contenant ledit drapeau de condition, lesdits moyens d'exécution d'instruction de condition déterminant l'état d'un bit prédéterminé dans ledit registre prédéterminé, et (ii) un registre récapitulatif au moins pour ledit registre prédéterminé qui contient un bit sélectionné identifiant l'état dudit bit prédéterminé, et lesdits moyens d'exécution d'instruction de défaut contrôlant ledit bit sélectionné dans ledit registre récapitulatif pour déterminer s'il existe une condition de défaut.

12. Processeur tel que défini dans la revendication 5 ou 8, dans lequel ledit emplacement prédéterminé du dispositif de stockage de données dudit processeur comprend un registre de stockage scalaire associé à une unité d'émission d'instructions dudit processeur séparée d'une mémoire principale ou d'une antémémoire principale du processeur.

13. Méthode telle que définie dans la revendication 1 ou 4, selon laquelle ladite étape de création et de stockage comprend l'étape de stockage dudit drapeau de condition dans le dispositif de stockage de données dudit processeur à l'intérieur d'un registre de stockage scalaire associé à une unité d'émission d'instructions dudit processeur séparée d'une mémoire principale ou d'une antémémoire principale du processeur.

14. Méthode telle que définie dans la revendication 13, selon laquelle ladite étape d'exécution de ladite instruction de détection de défaut qui contrôle l'état dudit drapeau de condition stocké est exécutée au sein de ladite unité d'émission d'instructions dudit processeur; et selon laquelle ladite méthode comprend en outre l'étape qui consiste à spécifier un registre scalaire particulier stockant ledit drapeau de condition qui doit être testé en vue de rechercher une condition de défaut par ladite instruction de détection de défaut.

15. Méthode telle que définie dans la revendication 1, selon laquelle ladite étape de déclenchement de l'exécution d'une séquence d'instructions de prise en charge de défaut comprend, préalablement à l'exécution de ladite séquence d'instructions de prise en charge de défaut, le stockage d'un bloc de défaut sur une pile servant à identifier la condition de défaut, qui comprend les étapes de : (i) stockage d'une adresse indiquant ladite instruction sur ladite pile; (ii) stockage d'une identification d'état du processeur sur ladite pile; et (iii) stockage d'une adresse d'une instruction qui a déterminé l'état du drapeau de condition sur ladite pile.

16. Processeur de données numériques tel que défini dans la revendication 5, dans lequel ladite instruction particulière est une instruction de type d'instruction de condition qui détermine l'état d'un bit prédéterminé dans un registre prédéterminé parmi plusieurs registres dudit processeur, et dans lequel lesdits moyens d'exécution d'instruction de détection de défaut comprennent :
des moyens de détermination de condition de défaut destinés à contrôler ledit bit prédéterminé dans ledit registre prédéterminé afin de déterminer s'il existe une condition de défaut, lesdits moyens de détermination de condition de défaut étant sensibles au fait que ledit drapeau de condition indique une condition de défaut et comprenant :
des moyens de stockage sur pile destinés à stocker un bloc de défaut sur une pile servant à identifier la condition qui comprennent : (i) des moyens pour stoker une adresse indiquant ladite instruction sur ladite pile; (ii) des moyens pour stocker une identification d'état du processeur sur ladite pile; et (iii) des moyens pour stocker une adresse d'une instruction qui a déterminé l'état du drapeau de condition sur ladite pile.
